# EUROPÄISCHE PATENTSCHRIFT

(11) **EP 3 014 725 B1**
(45) Veröffentlichungstag und Bekanntmachung des Hinweises auf die Patenterteilung: **26.04.2017**
(21) Anmeldenummer: 14729327.8
(22) Anmeldetag: 10.06.2014
(51) Int. Cl.: H02J 7/00, B60L 11/18, H02M 7/483

(54) **ENERGIESPEICHEREINRICHTUNG MIT GLEICHSPANNUNGSVERSORGUNGSSCHALTUNG UND VERFAHREN ZUM BEREITSTELLEN EINER GLEICHSPANNUNG AUS EINER ENERGIESPEICHEREINRICHTUNG**
ENERGY STORAGE DEVICE HAVING A DC VOLTAGE SUPPLY CIRCUIT AND METHOD FOR PROVIDING A DC VOLTAGE FROM AN ENERGY STORAGE DEVICE
DISPOSITIF ACCUMULATEUR D'ÉNERGIE DOTÉ D'UN CIRCUIT D'ALIMENTATION EN TENSION CONTINUE ET PROCÉDÉ POUR FOURNIR UNE TENSION CONTINUE À PARTIR D'UN DISPOSITIF ACCUMULATEUR D'ÉNERGIE

(30) Priorität: 28.06.2013 DE 102013212716
(43) Veröffentlichungstag der Anmeldung: 04.05.2016
(73) Patentinhaber: Robert Bosch GmbH, 70442 Stuttgart (DE)
(72) Erfinder: BRAUN, Martin, 72149 Neustetten-Wolfenhausen (DE); RAPP, Holger, 71254 Ditzingen (DE)
(86) Internationale Anmeldenummer: PCT/EP2014/062044
(87) Internationale Veröffentlichungsnummer: WO 2014/206724

(56) Entgegenhaltungen:
- DE-A1-102010 041 040
- US-A1- 2013 127 251

## Beschreibung

Die Erfindung betrifft eine Energiespeichereinrichtung mit einer Gleichspannungsversorgungsschaltung sowie ein Verfahren zum Bereitstellen einer Gleichspannung aus einer Energiespeichereinrichtung, insbesondere einen Batteriedirektumrichter, welcher ein Fahrzeugbordnetz mit einer Gleichspannung versorgt.

### Stand der Technik

Es zeichnet sich ab, dass in Zukunft sowohl bei stationären Anwendungen, wie z.B. Windkraftanlagen oder Solaranlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren.

Die Einspeisung von mehrphasigem Strom in eine elektrische Maschine wird üblicherweise durch einen Umrichter in Form eines Pulswechselrichters bewerkstelligt. Dazu kann eine von einem Gleichspannungszwischenkreis bereitgestellte Gleichspannung in eine mehrphasige Wechselspannung, beispielsweise eine dreiphasige Wechselspannung umgerichtet werden. Der Gleichspannungszwischenkreis wird dabei von einem Strang aus seriell verschalteten Batteriemodulen gespeist. Um die für eine jeweilige Anwendung gegebenen Anforderungen an Leistung und Energie erfüllen zu können, werden häufig mehrere Batteriemodule in einer Traktionsbatterie in Serie geschaltet.

Die Serienschaltung mehrerer Batteriemodule bringt das Problem mit sich, dass der gesamte Strang ausfällt, wenn ein einziges Batteriemodul ausfällt. Ein solcher Ausfall des Energieversorgungsstrangs kann zu einem Ausfall des Gesamtsystems führen. Weiterhin können temporär oder permanent auftretende Leistungsminderungen eines einzelnen Batteriemoduls zu Leistungsminderungen im gesamten Energieversorgungsstrang führen.

In der Druckschrift US 5,642,275 A1 ist ein Batteriesystem mit integrierter Wechselrichterfunktion beschrieben. Systeme dieser Art sind unter dem Namen Multilevel Cascaded Inverter oder auch Battery Direct Inverter (Batteriedirektumrichter, BDI) bekannt. Solche Systeme umfassen Gleichstromquellen in mehreren Energiespeichermodulsträngen, welche direkt an eine elektrische Maschine oder ein elektrisches Netz anschließbar sind. Dabei können einphasige oder mehrphasige Versorgungsspannungen generiert werden. Die Energiespeichermodulstränge weisen dabei eine Mehrzahl von in Serie geschalteten Energiespeichermodulen auf, wobei jedes Energiespeichermodul mindestens eine Batteriezelle und eine zugeordnete steuerbare Koppeleinheit aufweist, welche es erlaubt, in Abhängigkeit von Steuersignalen die jeweils zugeordnete mindestens eine Batteriezelle zu überbrücken oder die jeweils zugeordnete mindestens eine Batteriezelle in den jeweiligen Energiespeichermodulstrang zu schalten. Dabei kann die Koppeleinheit derart gestaltet sein, dass sie es zusätzlich erlaubt, die jeweils zugeordnete mindestens eine Batteriezelle auch mit inverser Polarität in den jeweiligen Energiespeichermodulstrang zu schalten oder auch den jeweiligen Energiespeichermodulstrang zu unterbrechen. Durch geeignete Ansteuerung der Koppeleinheiten, z.B. mit Hilfe von Pulsweitenmodulation, können auch geeignete Phasensignale zur Steuerung der Phasenausgangsspannung bereitgestellt werden, so dass auf einen separaten Pulswechselrichter verzichtet werden kann. Der zur Steuerung der Phasenausgangsspannung erforderliche Pulswechselrichter ist damit sozusagen in den BDI integriert.
BDIs weisen gegenüber herkömmlichen Systemen üblicherweise einen höheren Wirkungsgrad, eine höhere Ausfallsicherheit und einen deutlich geringeren Oberschwingungsgehalt ihrer Ausgangsspannung auf. Die Ausfallsicherheit wird unter anderem dadurch gewährleistet, dass defekte, ausgefallene oder nicht voll leistungsfähige Batteriezellen durch geeignete Ansteuerung der ihnen zugeordneten Koppeleinheiten in den Energieversorgungssträngen überbrückt werden können. Die Phasenausgangsspannung eines Energiespeichermodulstrangs kann durch entsprechendes Ansteuern der Koppeleinheiten variiert und insbesondere stufig eingestellt werden. Die Stufung der Ausgangsspannung ergibt sich dabei aus der Spannung eines einzelnen Energiespeichermoduls, wobei die maximal mögliche Phasenausgangsspannung durch die Summe der Spannungen aller Energiespeichermodule eines Energiespeichermodulstrangs bestimmt wird.
Die Druckschriften DE 10 2010 027 857 A1 und DE 10 2010 027 861 A1 beispielsweise offenbaren Batteriedirektinverter mit mehreren Batteriemodulsträngen, welche direkt an eine elektrische Maschine anschließbar sind

Weitere Druckschriften zum Stand der Technik sind US 2013/127251 A1 und DE 10 2010 041040 A1.

Am Ausgang von BDIs steht keine konstante Gleichspannung zur Verfügung, da die Energiespeicherzellen auf unterschiedliche Energiespeichermodule aufgeteilt sind und deren Koppeleinrichtungen gezielt zur Erzeugung einer Spannungslage angesteuert werden müssen. Durch diese Verteilung steht ein BDI im Grunde nicht als Gleichspannungsquelle, beispielsweise für die Speisung eines Bordnetzes eines elektrischen Fahrzeugs, zur Verfügung. Dementsprechend ist auch das Laden der Energiespeicherzellen über eine herkömmliche Gleichspannungsquelle nicht ohne weiteres möglich.

Es besteht daher ein Bedarf an einer Energiespeichereinrichtung mit einer Gleichspannungsversorgungsschaltung und einem Verfahren zum Betreiben derselben, mit denen ein Gleichspannungsabnehmer aus der Energiespeichereinrichtung mit einer Gleichspannung gespeist bzw. eine Gleichspannungsladeschaltung an die Energiespeichereinrichtung angekoppelt werden kann.

### Offenbarung der Erfindung

Die vorliegende Erfindung schafft gemäß einem Aspekt ein System mit einer Energiespeichereinrichtung und einer Gleichspannungsversorgungsschaltung, wobei die Energiespeichereinrichtung mindestens zwei Energieversorgungszweige aufweist, welche an einem ersten Ausgang jeweils mit mindestens einem Ausgangsanschluss der Energiespeichereinrichtung zur Erzeugung einer Wechselspannung an den Ausgangsanschlüssen und an einem zweiten Ausgang mit einer gemeinsamen Sammelschiene gekoppelt sind, wobei jeder der Energieversorgungszweige eine Vielzahl von in Serie geschalteten Energiespeichermodulen aufweist. Die Energiespeichermodule umfassen jeweils ein Energiespeicherzellenmodul, welches mindestens eine Energiespeicherzelle aufweist, und eine Koppeleinrichtung mit einer Koppelbrückenschaltung aus Koppelelementen, wobei die Koppelelemente dazu ausgelegt sind, das Energiespeicherzellenmodul selektiv in den jeweiligen Energieversorgungszweig zu schalten oder in dem Energieversorgungszweig zu umgehen. Die Gleichspannungsversorgungsschaltung weist eine Brückenschaltung mit einer Vielzahl von ersten Speiseanschlüssen, welche jeweils mit einem der Ausgangsanschlüsse der Energiespeichereinrichtung gekoppelt sind, zwei Speiseknoten, von denen mindestens einer mit der Brückenschaltung gekoppelt ist, und eine Modulabgriffsschaltung auf, welche mindestens einen Modulschaltzweig mit einer Kommutierungsdiode aufweist, wobei jeder der mindestens einen Modulschaltzweige einen Koppelknoten zwischen zwei Energiespeichermodulen eines der Energieversorgungszweige schaltbar mit einem Speiseknoten verbindet.

Gemäß einem weiteren Aspekt schafft die vorliegende Erfindung ein Verfahren zum Bereitstellen einer Gleichspannung aus einem erfindungsgemäßen System gemäß dem ersten Aspekt, mit den Schritten des Ermittelns der Ausgabespannung der Energieversorgungszweige an den Ausgangsanschlüssen der Energiespeichereinrichtung, des schaltenden Koppelns eines Koppelknotens zwischen zwei Energiespeichermodulen eines der Energieversorgungszweige Z mit einem Speiseknoten, der nicht mit der Sammelschiene der Energieversorgungseinrichtung verbunden ist oder des schaltenden Koppelns eines ersten Koppelknotens zwischen zwei Energiespeichermodulen eines der Energieversorgungszweige Z mit dem ersten Speiseknoten und des schaltenden Koppelns eines zweiten Koppelknotens zwischen zwei Energiespeichermodulen eines der Energieversorgungszweige Z mit dem zweiten Speiseknoten, sofern keiner der beiden Speiseknoten mit der Sammelschiene der Energieversorgungseinrichtung verbunden ist - vorteilhafterweise vor allem dann, wenn die ermittelte Ausgabespannung geringer ist als die maximale Ausgabespannung eines einzelnen Energiespeichermoduls -, des Betreibens der sich zwischen den Koppelknoten und einer Sammelschiene der Energiespeichereinrichtung befindlichen Energiespeichermodule derart, dass stets zumindest an einem der Koppelknoten ein Potenzial ansteht, das sich mindestens um die maximale Ausgangsspannung eines Energiespeichermoduls vom Potenzial der Sammelschiene unterscheidet, und des Einstellens der Ausgabespannung der übrigen Energiespeichermodule jeder der Energieversorgungszweige derart, dass die Gesamtausgabespannung der Energieversorgungszweige an den Ausgangsanschlüssen der Energiespeichereinrichtung der im ersten Schritt ermittelten Ausgabespannung entspricht.

### Vorteile der Erfindung

Es ist Idee der vorliegenden Erfindung, eine Schaltung für die Ausgänge einer modular ausgestalteten Energiespeichereinrichtung, insbesondere eines Batteriedirektumrichters, vorzusehen, mit der eine Gleichspannung für den Betrieb eines Gleichspannungsabnehmers, beispielsweise eines Gleichspannungswandlers eines Bordnetzes eines elektrisch betriebenen Fahrzeugs, während des Betriebs der Energiespeichereinrichtung für die Ansteuerung einer elektrischen Maschine bereitgestellt werden kann. Dazu ist es vorgesehen, eine Dioden-Brückenschaltung an die Ausgangsanschlüsse der Energiespeichereinrichtung anzukoppeln, mit Hilfe derer eine Gleichspannung an den Ausgangsanschlüssen abgegriffen werden kann. Gleichzeitig dient eine Modulabgriffsschaltung dazu, eine Gleichspannung selektiv aus einem ausgewählten Teil der Energiespeichermodule an den Gleichspannungsabnehmer abzuführen.

Besonders vorteilhaft ist es dabei, dass stets eine weitere Gleichspannungslage, beispielsweise zur Speisung eines Zwischenkreiskondensators des Bordnetzes aus der Energiespeichereinrichtung, vorhanden ist, egal in welchem Betriebszustand die Energiespeichereinrichtung gerade betrieben wird. Insbesondere bei geringer gesamter Ausgabespannung der Energiespeichereinrichtung, welche die Ausgabespannung eines einzelnen Energiespeichermoduls unterschreitet, kann die Modulabgriffsschaltung genutzt werden, um den abgegriffenen Teil der Energiespeichermodule mit voller Modulausgabespannung betreiben zu können und so die Gleichspannung für den Gleichspannungsabnehmer bereitstellen zu können. Die Gesamtausgabespannung der Energiespeichereinrichtung wird dadurch nicht beeinflusst, da die übrigen Energiespeichermodule entsprechend gegenpolig geschaltet werden können, um die Ausgabespannung des abgegriffenen Teils der Energiespeichermodule kompensieren zu können.

Ein weiterer Vorteil dieser Modulabgriffsschaltung besteht darin, dass eine Ladeschaltung, beispielsweise von einem Reichweitenvergrößerer in einem elektrisch betriebenen Fahrzeug, in Reihe zu dem Gleichspannungsabnehmer gekoppelt werden kann, und zumindest in die über die Modulabgriffsschaltung angekoppelten Energiespeichermodule Energie zum Laden der Energiespeicherzellen auch während des Versorgungsbetriebs der Energiespeichereinrichtung eingespeist werden kann. Durch ein Spannungsbalancingverfahren innerhalb der Energieversorgungszweige kann die Ladeenergie dann auf alle Energiespeicherzellen der Energiespeichermodule umverteilt werden.

Gemäß einer Ausführungsform des erfindungsgemäßen Systems kann das System weiterhin einen Gleichspannungswandler umfassen, welcher zwischen den ersten Speiseknoten und den zweiten Speiseknoten gekoppelt ist. Dabei kann gemäß einer Ausführungsform der Gleichspannungswandler einen Hochsetzsteller oder einen Durchflusswandler aufweisen.

Gemäß einer weiteren Ausführungsform des erfindungsgemäßen Systems kann die Gleichspannungsversorgungsschaltung zwei Ladeschaltungsanschlüsse und eine Ladeschaltung aufweisen, welche über die zwei Ladeschaltungsanschlüsse in Reihe zu dem Gleichspannungswandler gekoppelt ist, und welche dazu ausgelegt ist, eine Ladegleichspannung für die Energiespeicherzellenmodule der Energiespeichereinrichtung bereitzustellen.

Gemäß einer weiteren Ausführungsform des erfindungsgemäßen Systems kann die Brückenschaltung eine Vielzahl von ersten Brückenschaltzweigen mit einer Diode oder einer Reihenschaltung aus einer Diode und einem Brückenkoppelschalter aufweisen, welche jeweils zwischen den ersten Speiseknoten und einen der Vielzahl von ersten Speiseanschlüssen gekoppelt sind.

Gemäß einer weiteren Ausführungsform des erfindungsgemäßen Systems kann die Brückenschaltung eine Vielzahl von zweiten Speiseanschlüssen aufweisen, welche jeweils mit einem der Ausgangsanschlüsse der Energiespeichereinrichtung gekoppelt sind.

Gemäß einer weiteren Ausführungsform des erfindungsgemäßen Systems kann die Brückenschaltung eine Vielzahl von zweiten Brückenschaltzweigen mit einer Diode oder einer Reihenschaltung aus einer Diode und einem Brückenkoppelschalter aufweisen, welche jeweils zwischen den zweiten Speiseknoten und einen der Vielzahl von zweiten Speiseanschlüssen gekoppelt sind.

Gemäß einer weiteren Ausführungsform des erfindungsgemäßen Systems kann die Anzahl der Energiespeichermodule in den jeweiligen Energieversorgungszweigen auf beiden Seiten des jeweiligen Koppelknotens identisch sein. Dies macht in vorteilhafter Weise eine Spannungskompensation auf beiden Seiten der Koppelknoten ansteuerungstechnisch besonders einfach.

Gemäß einer weiteren Ausführungsform des erfindungsgemäßen Systems kann das System weiterhin eine n-phasige elektrische Maschine mit n Phasenanschlüssen aufweisen, welche mit den Ausgangsanschlüssen der Energiespeichereinrichtung gekoppelt ist, wobei n ≥ 1.

Gemäß einer weiteren Ausführungsform der Erfindung kann die n-phasige elektrische Maschine einen Wicklungssternpunkt aufweisen, der aus der Maschine herausgeführt ist. Des Weiteren kann dieser Wicklungssternpunkt mit der Sammelschiene der Energiespeichereinrichtung verbunden sein. Dies ist besonders vorteilhaft bei zweiphasigen Maschinen (n = 2).

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines Systems mit einer Energiespeichereinrichtung;
- Fig. 2: eine schematische Darstellung eines Energiespeichermoduls einer Energiespeichereinrichtung;
- Fig. 3: eine schematische Darstellung eines Systems mit einer Energiespeichereinrichtung und einer Gleichspannungsversorgungsschaltung gemäß einer Ausführungsform der Erfindung;
- Fig. 4: eine schematische Darstellung eines Systems mit einer Energiespeichereinrichtung und einer Gleichspannungsversorgungsschaltung gemäß einer weiteren Ausführungsform der vorliegenden Erfindung;
- Fig. 5: eine schematische Darstellung eines Systems mit einer Energiespeichereinrichtung und einer Gleichspannungsversorgungsschaltung gemäß einer weiteren Ausführungsform der vorliegenden Erfindung;
- Fig. 6: eine schematische Darstellung eines Modulschaltzweigs bzw. Brückenschaltzweigs für eine Gleichspannungsversorgungsschaltung gemäß einer weiteren Ausführungsform der Erfindung;
- Fig. 7: eine schematische Darstellung eines Verfahrens zum Bereitstellen einer Gleichspannung aus einer Energiespeichereinrichtung gemäß einer weiteren Ausführungsform der vorliegenden Erfindung;
- Fig. 8: eine schematische Darstellung einer Ladeschaltung für ein System nach einer der Fig. 3 bis 5 gemäß einer weiteren Ausführungsform der vorliegenden Erfindung; und
- Fig. 9: eine schematische Darstellung einer weiteren Ladeschaltung für ein System nach einer der Fig. 3 bis 5 gemäß einer weiteren Ausführungsform der vorliegenden Erfindung.

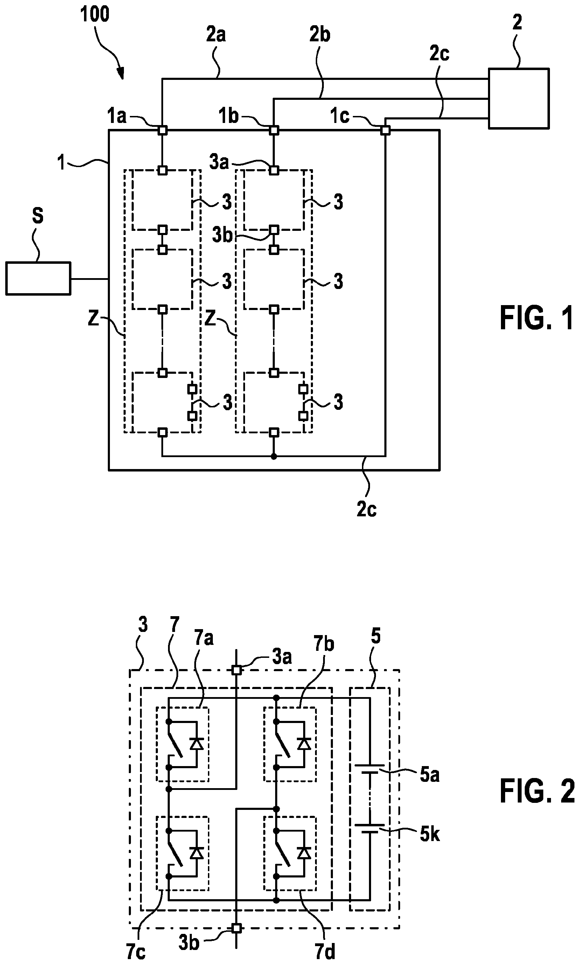

Fig. 1 zeigt eine schematische Darstellung eines Systems 100 mit einer Energiespeichereinrichtung 1 zur Spannungswandlung von in Energiespeichermodulen 3 bereitgestellter Gleichspannung in eine n-phasige Wechselspannung. Die Energiespeichereinrichtung 1 umfasst eine Vielzahl von Energieversorgungszweigen Z, von denen in Fig.1 beispielhaft zwei gezeigt sind, welche zur Erzeugung einer zweiphasigen Wechselspannung, beispielsweise für eine Transversalflussmaschine 2, geeignet sind. Es ist jedoch klar, dass jede andere Anzahl an Energieversorgungszweigen Z ebenso möglich sein kann. Die Energieversorgungszweige Z können eine Vielzahl von Energiespeichermodulen 3 aufweisen, welche in den Energieversorgungszweigen Z in Serie geschaltet sind. Beispielhaft sind in Fig. 1 je drei Energiespeichermodule 3 pro Energieversorgungszweig Z gezeigt, wobei jedoch jede andere Anzahl an Energiespeichermodulen 3 ebenso möglich sein kann. Die Energiespeichereinrichtung 1 verfügt an jedem der Energieversorgungszweige Z über einen Ausgangsanschluss 1a und 1 b, welche jeweils an Phasenleitungen 2a und 2b angeschlossen sind. Die Phasenleitung 2c der elektrischen Maschine 2 ist im Beispiel der Fig. 1 direkt über den Sternpunkt der Maschine 2 mit einer Sammelschiene 2c verbunden, die wiederum mit Eingangsanschlüssen, vorzugsweise dem Sternpunkt, der Energieversorgungszweige Z gekoppelt ist. Es kann jedoch auch möglich sein, die elektrische Maschine 2 nicht über eine Phasenleitung 2c mit der Energiespeichereinrichtung 1 rückzukoppeln. Dies kann je nach Typ und Auslegung der elektrischen Maschine 2 gewählt werden.

Das System 100 kann weiterhin eine Steuereinrichtung S umfassen, welche mit der Energiespeichereinrichtung 1 verbunden ist, und mit Hilfe derer die Energiespeichereinrichtung 1 gesteuert werden kann, um die gewünschten Ausgangsspannungen an den jeweiligen Ausgangsanschlüssen 1 a, 1 b bzw. 1 c bereitzustellen.

Die Energiespeichermodule 3 weisen jeweils zwei Ausgangsanschlüsse 3a und 3b auf, über welche eine Ausgangsspannung der Energiespeichermodule 3 bereitgestellt werden kann. Da die Energiespeichermodule 3 primär in Reihe geschaltet sind, summieren sich die Ausgangsspannungen der Energiespeichermodule 3 zu einer Gesamt-Ausgangsspannung, welche an dem jeweiligen der Ausgangsanschlüsse 1 a, 1 b bzw. 1 c der Energiespeichereinrichtung 1 bereitgestellt werden kann.

Beispielhafte Aufbauformen der Energiespeichermodule 3 sind in Fig. 2 in größerem Detail gezeigt. Die Energiespeichermodule 3 umfassen dabei jeweils eine Koppeleinrichtung 7 mit mehreren Koppelelementen 7a, 7b, 7c und 7d. Die Energiespeichermodule 3 umfassen weiterhin jeweils ein Energiespeicherzellenmodul 5 mit einem oder mehreren in Reihe geschalteten Energiespeicherzellen 5a bis 5k.

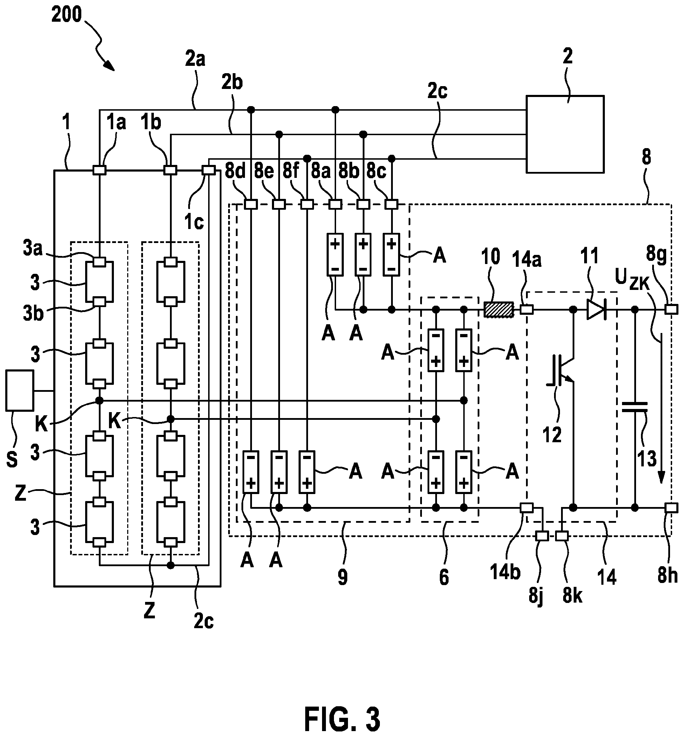

Das Energiespeicherzellenmodul 5 kann dabei beispielsweise in Reihe geschaltete Energiespeicherzellen 5a bis 5k, beispielsweise Lithium-Ionen-Zellen aufweisen. Dabei beträgt die Anzahl der Energiespeicherzellen 5a bis 5k in den in Fig. 2 und 3 gezeigten Energiespeichermodulen 3 beispielhaft zwei, wobei jedoch jede andere Zahl von Energiespeicherzellen 5a bis 5k ebenso möglich ist.

Die Energiespeicherzellenmodule 5 sind über Verbindungsleitungen mit Eingangsanschlüssen der zugehörigen Koppeleinrichtung 7 verbunden. Die Koppeleinrichtung 7 ist in Fig. 2 beispielhaft als Vollbrückenschaltung mit je zwei Koppelelementen 7a, 7c und zwei Koppelelementen 7b, 7d ausgebildet. Die Koppelelemente 7a, 7b, 7c, 7d können dabei jeweils ein aktives Schaltelement, beispielsweise einen Halbleiterschalter, und eine dazu parallel geschaltete Freilaufdiode aufweisen. Es kann dabei vorgesehen sein, dass die Koppelelemente 7a, 7b, 7c, 7d als MOSFET-Schalter, welche bereits eine intrinsische Diode aufweisen, oder IGBT-Schalter ausgebildet sind.

Die Koppelelemente 7a, 7b, 7c, 7d können derart angesteuert werden, beispielsweise mit Hilfe der in Fig. 1 dargestellten Steuereinrichtung S, dass das jeweilige Energiespeicherzellenmodul 5 selektiv zwischen die Ausgangsanschlüsse 3a und 3b geschaltet wird oder dass das Energiespeicherzellenmodul 5 überbrückt wird. Mit Bezug auf Fig. 2 kann das Energiespeicherzellenmodul 5 beispielsweise in Vorwärtsrichtung zwischen die Ausgangsanschlüsse 3a und 3b geschaltet werden, indem das aktive Schaltelement des Koppelelements 7d und das aktive Schaltelement des Koppelelements 7a in einen geschlossenen Zustand versetzt werden, während die beiden übrigen aktiven Schaltelemente der Koppelelemente 7b und 7c in einen offenen Zustand versetzt werden. Ein Überbrückungszustand kann beispielsweise dadurch eingestellt werden, dass die beiden aktiven Schaltelemente der Koppelelemente 7a und 7b in geschlossenen Zustand versetzt werden, während die beiden aktiven Schaltelemente der Koppelelemente 7c und 7d in offenem Zustand gehalten werden. Ein zweiter Überbrückungszustand kann dadurch eingestellt werden, dass die beiden aktiven Schaltelemente der Koppelelemente 7a und 7b in offenem Zustand gehalten werden, während die beiden aktiven Schaltelemente der Koppelelemente 7c und 7d in geschlossenen Zustand versetzt werden. Schließlich kann das Energiespeicherzellenmodul 5 beispielsweise in Rückwärtsrichtung zwischen die Ausgangsanschlüsse 3a und 3b geschaltet werden, indem das aktive Schaltelement des Koppelelements 7b und das aktive Schaltelement des Koppelelements 7c in einen geschlossenen Zustand versetzt werden, während die beiden übrigen aktiven Schaltelemente der Koppelelemente 7a und 7d in einen offenen Zustand versetzt werden. Durch geeignetes Ansteuern der Koppeleinrichtungen 7 können daher einzelne Energiespeicherzellenmodule 5 der Energiespeichermodule 3 gezielt und mit beliebiger Polung in die Reihenschaltung eines Energieversorgungszweigs Z integriert werden.

Beispielhaft dient das System 100 in Fig. 1 zur Speisung einer zweiphasigen elektrischen Maschine 2, beispielsweise in einem elektrischen Antriebssystem für ein elektrisch betriebenes Fahrzeug. Es kann jedoch auch vorgesehen sein, dass die Energiespeichereinrichtung 1 zur Erzeugung von elektrischem Strom für ein Energieversorgungsnetz 2 verwendet wird. Die Energieversorgungszweige Z können an ihrem zu einem Sternpunkt verbundenen Ende mit einer Sammelschiene 2c (Bezugspotentialschiene) verbunden werden. Auch ohne weitere Verbindung mit einem außerhalb der Energieversorgungseinrichtung 1 liegenden Bezugspotential kann das Potential der zu einem Sternpunkt verbundenen Enden der Energieversorgungszweige Z per Definition als Bezugspotential festgelegt werden.

Für die Erzeugung einer Phasenspannung zwischen den Ausgangsanschlüssen 1 a und 1 b einerseits und der Sammelschiene 2c andererseits wird üblicherweise nur ein Teil der Energiespeicherzellenmodule 5 der Energiespeichermodule 3 benötigt. Deren Koppeleinrichtungen 7 können derart angesteuert werden, dass die Gesamt-Ausgangsspannung eines Energieversorgungszweigs Z stufig in einem rechteckigen Spannungs-/Strom-Stellbereich zwischen der mit der Anzahl der Energiespeichermodule 3 multiplizierten negativen Spannung eines einzelnen Energiespeicherzellenmoduls 5 und der mit der Anzahl der Energiespeichermodule 3 multiplizierten positiven Spannung eines einzelnen Energiespeicherzellenmoduls 5 einerseits und dem negativen und dem positiven Nennstrom durch ein einzelnes Energiespeichermodul 3 andererseits eingestellt werden kann.

Eine derartige Energiespeichereinrichtung 1 wie in Fig. 1 gezeigt, weist an den Ausgangsanschlüssen 1a, 1b, zu verschiedenen Zeitpunkten im Betrieb unterschiedliche Potentiale auf, und kann daher nicht ohne weiteres als Gleichspannungsquelle genutzt werden. Besonders in elektrischen Antriebssystemen elektrisch betriebener Fahrzeuge ist es häufig wünschenswert, das Bordnetz des Fahrzeugs, beispielsweise ein Hochvoltbordnetz oder ein Niedervoltbordnetz, aus der Energiespeichereinrichtung 1 zu speisen. Daher ist eine Gleichspannungsversorgungsschaltung vorgesehen, welche dazu ausgelegt ist, an eine Energiespeichereinrichtung 1 angeschlossen zu werden, und gespeist von jener eine Gleichspannung, beispielsweise für das Bordnetz eines elektrisch betriebenen Fahrzeugs, bereitzustellen.

Fig. 3 zeigt eine schematische Darstellung eines Systems 200 mit einer Energiespeichereinrichtung 1 und einer solchen Gleichspannungsversorgungsschaltung 8. Die Gleichspannungsversorgungsschaltung 8 ist mit der Energiespeichereinrichtung 1 über erste Sammelanschlüsse 8a, 8b und 8c einerseits und über zweite Sammelanschlüsse 8d, 8e und 8f andererseits gekoppelt. An Abgriffsanschlüssen 8g und 8h kann eine Gleichspannung U_{ZK} der Gleichspannungsversorgungsschaltung 8 abgegriffen werden. An den Abgriffsanschlüssen 8g und 8h kann beispielsweise ein weiterer (nicht gezeigter) Gleichspannungswandler für ein Bordnetz eines elektrisch betriebenen Fahrzeugs angeschlossen werden oder es kann - bei geeignetem Abgleich zwischen der Spannung U_{ZK} zwischen den Abgriffsanschlüssen 8g und 8h und der Bordnetzspannung - dieses Bordnetz direkt angeschlossen werden.

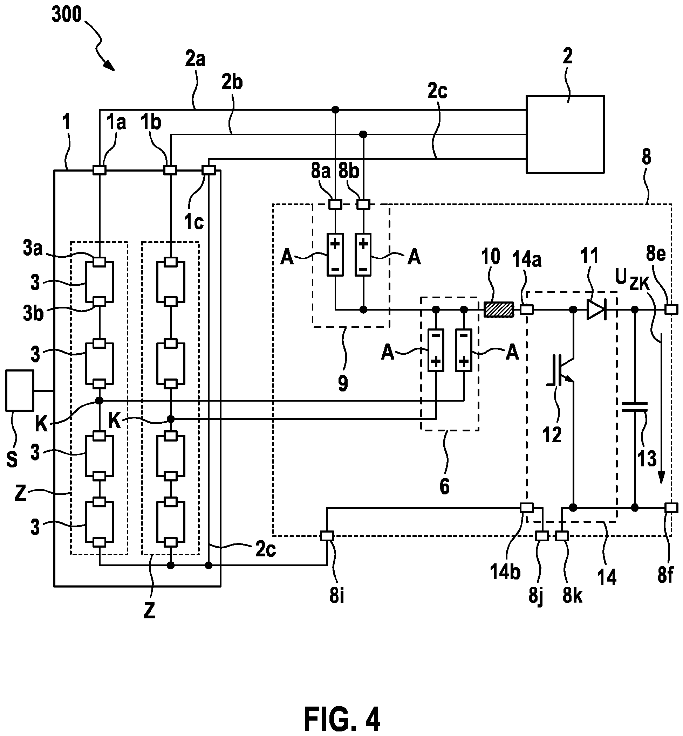

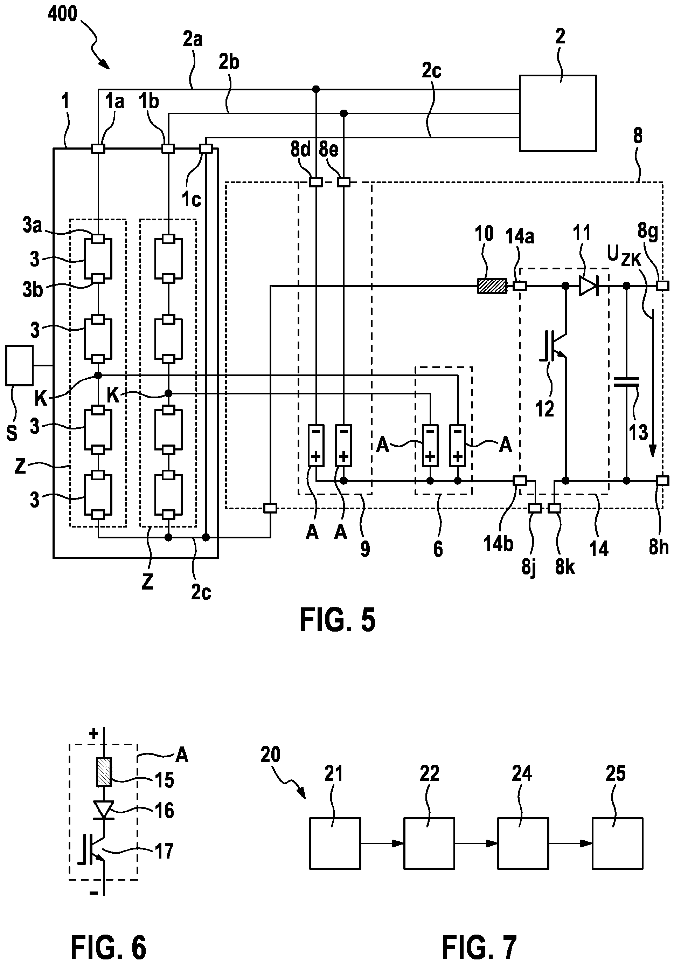

Die Gleichspannungsversorgungsschaltung 8 weist im Beispiel der Fig. 3 eine Vollbrückenschaltung 9 auf, welche über die ersten und zweiten Sammelanschlüsse 8a bis 8f jeweils mit einem der Ausgangsanschlüsse 1 a, 1 b, 1 c der Energiespeichereinrichtung 1 gekoppelt ist. Die Sammelanschlüsse 8a bis 8f können dabei beispielsweise an den Phasenleitungen 2a, 2b bzw. 2c des Systems 200 gekoppelt sein. Die Vollbrückenschaltung 9 kann Brückenschaltzweige A aufweisen, die in Fig. 6 beispielhaft in größerem Detail dargestellt sind. Dabei korrespondieren die Polbezeichnungen "+" und "-" des in Fig. 6 dargestellten Brückenschaltzweigs A mit der in Fig. 3 (und im Folgenden auch den Fig. 4 und 5) dargestellten Polbezeichnungen "+" und "-" der Elemente A, das heißt, der mit "+" bezeichnete Eingangsanschluss des Brückenschaltzweigs A in Fig. 6 korrespondiert mit den mit "+" bezeichneten Eingangsanschlüssen der Elemente A in Fig. 3 bis 5 und der mit "-" bezeichnete Eingangsanschluss des Brückenschaltzweigs A in Fig. 6 korrespondiert mit den mit "-" bezeichneten Eingangsanschlüssen der Elemente A in Fig. 3 bis 5. Der mit "+" bezeichneten Pol eines Brückenschaltzweigs wird im Folgenden als dessen Anode, der mit "-" bezeichnete Pol entsprechend als dessen Kathode bezeichnet,

Wie in Fig. 6 gezeigt, können die Brückenschaltzweige A jeweils eine Reihenschaltung aus jeweils einer Kommutierungsdiode 16 und einem aktiven Brückenkoppelschalter 17 aufweisen. Die Anordnung von Kommutierungsdiode 16 und Brückenkoppelschalter 17 innerhalb eines Brückenschaltzweigs A ist vertauschbar. Die Brückenkoppelschalter 17 können dabei beispielsweise MOSFET- oder IGBT-Leistungshalbleiterschalter aufweisen. Die Brückenschaltzweige A sind derart angeordnet, dass die Sammelanschlüsse 8a, 8b, 8c die Anoden der daran angeschlossenen Brückenschaltzweige A mit den Phasenleitungen 2a, 2b bzw. 2c koppeln und dass die Sammelanschlüsse 8d, 8e, 8f die Kathoden der daran angeschlossenen Brückenzweigschalter mit den Phasenleitungen 2a, 2b bzw. 2c koppeln. Die Kathoden der mit den Sammelanschlüssen 8a, 8b, 8c gekoppelten Brückenschaltzweige A können ihrerseits an einem gemeinsamen Kathodensammelpunkt der Vollbrückenschaltung 9 zusammengeschaltet sein, während die Anoden der mit den Sammelanschlüssen 8d, 8e, 8f gekoppelten Brückenschaltzweige A an einem gemeinsamen Anodensammelpunkt der Vollbrückenschaltung 9 zusammengeschaltet sind. Der Kathodensammelpunkt ist wiederum mit dem Speiseknoten 14a verbunden, der Anodensammelpunkt ist mit dem Speiseknoten 14b verbunden.

Durch diese Art der Verschaltung steht bei jeweils geschlossenen Brückenkoppelschaltern 17 an dem Kathodensammelpunkt der Vollbrückenschaltung 9 und damit am Speiseknoten 14a jeweils das momentan höchste Potential der Phasenleitungen 2a, 2b bzw. 2c und an dem Anodensammelpunkt der Vollbrückenschaltung 9 und damit am Speiseknoten 14b jeweils das momentan niedrigste Potential der Phasenleitungen 2a, 2b bzw. 2c an. Zusätzlich kann optional in jedem der Brückenschaltzweige A eine von Kommutierungsdrossel 15 vorgesehen sein, welche jeweils in Reihe zu den Dioden 16 und den Brückenkoppelschaltern 17 gekoppelt sind. Die Anordnung der Kommutierungsdrossel 15 innerhalb der Reihenschaltung aus Kommutierungsdiode 16, Brückenkoppelschalter 17 und Kommutierungsdrossel 15 ist dabei beliebig. Die Kommutierungsdrosseln 15 können dabei Potentialschwankungen, welche aufgrund von ansteuerungsbedingten stufigen Potentialwechseln in den jeweiligen Phasenleitungen 2a, 2b und 2c zeifinieise auftreten können, abpuffern, so dass die Dioden 16 weniger stark durch häufige Kommutierungsvorgänge belastet werden.

Dient die Gleichspannungsversorgungsschaltung nur der Entnahme von Energie aus der Energiespeichereinrichtung 1, beispielsweise zur Versorgung eines Bordnetzes, so kann auf die aktiven Brückenkoppelschalter 17 verzichtet werden. Diese werden in diesem Fall durch eine leitende Verbindung ersetzt. Soll über die Gleichspannungsversorgungsschaltung 8 auch Energie in die Energiespeichereinrichtung 1 eingespeist werden können, so sind die aktiven Brückenkoppelschalter 17 dagegen erforderlich.

Die Gleichspannungsversorgungsschaltung 8 weist zudem eine Modulabgriffsschaltung 6 auf, welche mindestens einen Modulschaltzweig A aufweist. Im vorliegenden Ausführungsbeispiel sind vier Modulschaltzweige A vorgesehen. Die Modulschaltzweige A können analog zu den Brückenschaltzweigen A in Fig. 6 aufgebaut sein, wobei wiederum die Polbezeichnungen "+" und "-" des Brückenschaltzweigs A in Fig. 6 mit den Polbezeichnungen "+" und "-" der Modulschaltzweige A in Fig. 3 bis 5 korrespondiert. Ein erster Modulschaltzweig A verbindet dabei einen ersten Koppelknoten K zwischen zwei Energiespeichermodulen 3 eines der Energieversorgungszweige Z schaltbar mit dem ersten Speiseknoten 14a, ein zweiter der Modulschaltzweig A verbindet diesen Koppelknoten K mit dem zweiten Speiseknoten 14b. Ein dritter und vierter Modulschaltzweig A verbinden einen zweiten Koppelknoten zwischen zwei Energiespeichermodulen 3 eines anderen der Energieversorgungszweige Z schaltbar mit dem ersten Speiseknoten 14a beziehungsweise dem zweiten Speiseknoten 14b. Im vorliegenden Ausführungsbeispiel bilden also zwei Modulschaltzweige A einen Kathodensammelpunkt am Speiseknoten 14a und es bilden zwei weitere Modulschaltzweige A einen Anodensammelpunkt am Speiseknoten 14beiner Gleichspannungseingangsstufe 14. Durch die Verschaltung der Koppelknoten K innerhalb der Serienschaltung der Energiespeichermodule 3 kann auch bei Betriebspunkten der Energiespeichereinrichtung 1, welche sehr geringe Ausgabespannungen der Energieversorgungszweige Z erfordert, stets eine Gleichspannungslage mit einer Mindestspannung garantiert werden.

Bei einer gleichmäßig auf beiden Seiten der jeweiligen Koppelknoten aufgeteilten Anzahl der Energiespeichermodule 3, idealerweise identischer Anzahl von Energiespeichermodulen 3 in den jeweiligen Energieversorgungszweigen Z auf beiden Seiten des jeweiligen Koppelknotens K, können jeweils paarweise Energiespeichermodule 3 paarweise gegenpolig mit voller betragsmäßiger Modulausgabespannung geschaltet werden, so dass deren gemeinsamer Nettobeitrag zur Gesamtausgabespannung des jeweiligen Energieversorgungszweigs Z Null ist. Dabei können die Paare derart gewählt werden, dass alle Energiespeichermodule 3 auf einer Seite des Koppelknotens K gleichsinnig geschaltet werden. Eines der Energiespeichermodule 3 kann in getaktetem Modus betrieben werden, um die jeweils angeforderte Gesamtausgabespannung des Energieversorgungszweigs Z zu realisieren. Auf diese Weise kann an dem Koppelknoten K gegenüber dem zweiten Speiseknoten 14b ein Potential abgegriffen werden, welches der Summe der Ausgabespannungen aller zwischen den Koppelknoten K und den Speiseknoten 14b geschalteten Energiespeichermodule 3 entspricht.

Dieser Betriebsmodus führt zwar dazu, dass die Gleichspannungseingangsstufe 14 stets mit einer Mindestspannung betrieben werden, hat aber gleichzeitig eine ungleiche Entladung der Energiespeichermodule 3 eines Energieversorgungszweigs Z zur Folge. Dieses Ungleichgewicht kann in anderen Betriebsmodi beispielsweise durch entsprechenden Balancingverfahren wieder ausgeglichen werden. Alternativ kann zeitweise auch nur einer der Energieversorgungszweige Z zur Bereitstellung der Gleichspannung herangezogen werden, während in dem anderen Energieversorgungszweig Z alle Energiespeichermodule 3 entsprechend umgepolt werden, so dass die weniger stark entladenen Energiespeichermodule 3 wieder stärker belastet werden und Energie in die zuvor entladenen Energiespeichermodule 3 zurückspeisen.

Erfindungsgemäß enthält die Modulabgriffsschaltung 6 mindestens einen der in dem Ausführungsbeispiel gemäß Fig. 3 dargestellten 4 Modulschaltzweige A. Ebenso sind auch Ausführungsformen der Modulabgriffsschaltung 6 möglich, bei denen weitere Koppelknoten K zwischen weiteren Energiespeichermodulen 3 der Energiespeichereinrichtung 1 über Modulschaltzweige A mit dem Speiseknoten 14a und/oder dem Speiseknoten 14b einer Gleichspannungseingangsstufe verbunden werden. Dabei sind die mit dem Speiseknoten 14a verbundenen Modulschaltzweige stets mit ihrer Kathode an diesem Speiseknoten 14a angeschlossen und es sind die mit dem Speiseknoten 14b verbundenen Modulschaltzweige stets mit ihrer Anode an diesem Speiseknoten 14b angeschlossen.

Zwischen den Sammelpunkten der Vollbrückenschaltung 9 und Modulabgriffsschaltung 6 besteht eine Potentialdifferenz, welche durch die Gleichspannungseingangsstufe 14 - im Beispiel der Fig. 3 ein Hochsetzsteller 14 - hochgesetzt werden kann. Der Hochsetzsteller 14 kann dabei dazu ausgelegt sein, in Abhängigkeit von dem Potential zwischen den Sammelpunkten der Vollbrückenschaltung 9 und Modulabgriffsschaltung 6 eine Gleichspannung U_{ZK} an den Abgriffsanschlüssen 8g, 8h der Gleichspannungsversorgungsschaltung 8 bereitzustellen. Der Hochsetzsteller 14 kann beispielsweise an dem ersten Speiseknoten 14a eine Wandlerdrossel 10 und eine Ausgangsdiode 11 in Reihenschaltung aufweisen, deren Mittelpunktsabgriff ein Stellerschaltelement 12 mit dem zweiten Speiseknoten 14b koppelt. Alternativ kann die Wandlerdrossel 10 auch zwischen dem Anodensammelpunkt und dem Stellerschaltelement 12 vorgesehen sein, oder es können zwei Wandlerdrosseln 10 an beiden Eingangsanschlüssen des Hochsetzstellers 14 vorgesehen sein.

Das Stellerschaltelement 12 kann beispielsweise einen Leistungshalbleiterschalter aufweisen, wie zum Beispiel einen MOSFET-Schalter oder einen IGBT-Schalter. Beispielsweise kann für das Stellerschaltelement 12 ein n-Kanal-IGBT verwendet werden, welcher im Normalzustand gesperrt ist. Es sollte dabei jedoch klar sein, dass jeder andere Leistungshalbleiterschalter für das Stellerschaltelement 12 ebenso eingesetzt werden kann.

Es besteht die Möglichkeit, auf das Stellerschaltelement 12 zu verzichten, oder das Stellerschaltelement 12 in einem dauerhaft sperrenden Zustand zu belassen, insbesondere dann, wenn die Potentialdifferenz zwischen den Kathoden- und Anodensammelpunkten stets innerhalb eines durch eine an die Abgriffsanschlüsse 8g, 8h angeschlossene weitere Komponente vorgegebenen Eingangsspannungsbereichs liegt. In diesem Fall kann in manchen Ausführungsformen auch auf die Ausgangsdiode 11 verzichtet werden.

Die Gleichspannungsversorgungsschaltung 8 kann weiterhin einen Zwischenkreiskondensator 13 aufweisen, welcher zwischen die Abgriffsanschlüsse 8g, 8h der Gleichspannungsversorgungsschaltung 8 geschaltet ist, und welcher dazu ausgelegt ist, die vom Hochsetzsteller 14 ausgegebenen Strompulse zu puffern und so am Ausgang des Hochsetzstellers 14 eine geglättete Gleichspannung U_{ZK} zu erzeugen. Über den Zwischenkreiskondensator 13 kann dann beispielsweise ein Gleichspannungswandler eines Bordnetzes eines elektrisch betriebenen Fahrzeugs gespeist werden oder es kann dieses Bordnetz in bestimmten Fällen auch direkt an den Zwischenkreiskondensator 13 angeschlossen werden.

Die Gleichspannungseingangsstufe 14 kann anders als in den Fig. 3 bis 5 beispielhaft dargestellt auch durch einen anderen Gleichspannungswandler realisiert werden, beispielsweise einen Durchflusswandler in Halbbrückenschaltung oder in Vollbrückenschaltung.

Die Anzahl der Brückenschaltzweige A in der Brückenschaltung 9 ist in Fig. 3 jeweils beispielhaft mit zwei mal drei = sechs angegeben und ist an die Anzahl der Ausgangsanschlüsse 1 a, 1 b, 1 c der Energiespeichereinrichtung 1 angepasst. Es sollte dabei klar sein, dass jede andere Anzahl von Brückenschaltzweigen A ebenso möglich ist, je nachdem, welche Phasenspannungen von der Energiespeichereinrichtung 1 erzeugt werden.

Die Gleichspannungsversorgungsschaltung 8 kann optional weiterhin zwei Ladeschaltungsanschlüsse 8j und 8k aufweisen, über die eine Ladeschaltung angeschlossen wird, welche über die zwei Ladeschaltungsanschlüsse in Reihe zu dem Gleichspannungswandler gekoppelt ist, und welche dazu ausgelegt ist, eine Ladegleichspannung für die Energiespeicherzellenmodule 5 der Energiespeichereinrichtung 1 bereitzustellen. Ist keine Ladeschaltung an dieser Stelle vorgesehen, so sind die Ladeschaltungsanschlüsse 8j und 8k leitend miteinander verbunden.

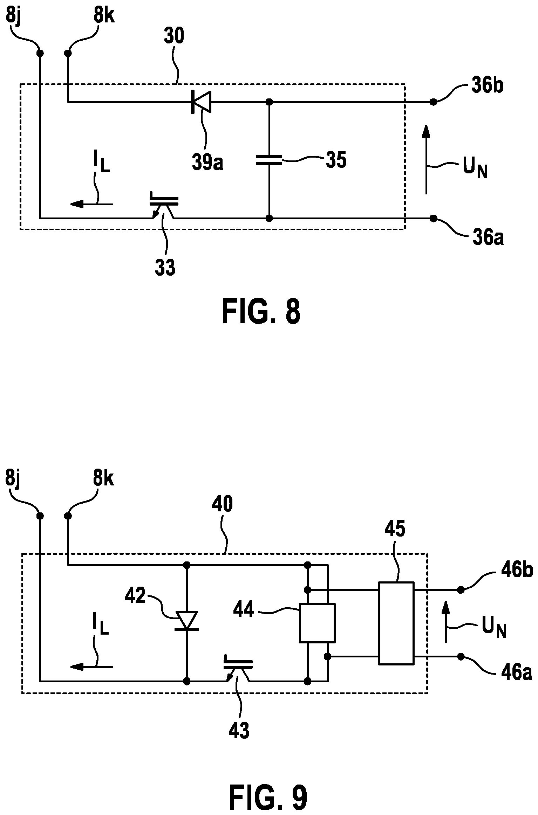

Die Fig. 8 und 9 zeigen schematische Darstellungen von Ladeschaltungen 30 bzw. 40, welche beispielsweise zum Laden eines oder mehrerer Energieversorgungszweige Z einer Energiespeichereinrichtung 1 und insbesondere für die Speisung der Ladeschaltungsanschlüsse 8j und 8k eingesetzt werden können.

Fig. 8 zeigt eine schematische Darstellung einer Ladeschaltung 30, welche Eingangsanschlüsse 36a, 36b aufweist, an denen eine Ladegleichspannung U_{N} eingespeist werden kann. Die Ladegleichspannung U_{N} kann dabei durch (nicht gezeigte) Schaltungsanordnungen erzeugt werden, beispielsweise Gleichspannungswandler, gesteuerte oder geregelte Gleichrichter mit Leistungsfaktorkorrektur (PFC, "power factor correction") oder dergleichen. Die Ladegleichspannung U_{N} kann beispielsweise durch ein eingangsseitig angeschlossenes Energieversorgungsnetz bereitgestellt werden. Die Ladeschaltung 30 kann weiterhin einen Zwischenkreiskondensator 35 aufweisen, über welchem eine Gleichspannung abgreifbar ist und der die Rückwirkung von pulsierenden Strömen sowohl auf der Eingangs- als auch auf der Ausgangsseite der Ladeschaltung 30 oder von Schaltvorgängen in der Ladeschaltung 30 selbst auf die Ladegleichspannung U_{N} erheblich reduziert. An Ladeschaltungsanschlüssen 8j und 8k der Ladeschaltung 30 kann eine Ausgangsspannung der Ladeschaltung 30 abgegriffen werden, welche zum Laden einer angeschlossenen Energiespeichereinrichtung, beispielsweise einer Reihe von Energiespeichermodulen 3 oder eines Energieversorgungszweigs Z einer Energiespeichereinrichtung 1 wie in den Fig. 3 bis 5 dargestellt, dienen kann.

Die Ladeschaltung 30 weist einen Halbleiterschalter 33 und eine Freilaufdiode 39a auf, welche einen Tiefsetzsteller implementieren. Als Stellgröße für den Ladestrom I_{L} der Ladeschaltung 30 kann beispielsweise die Ausgangsspannung der zu ladenden Energiespeichereinrichtung 1, beispielsweise einer Reihe von Energiespeichermodulen 3 oder eines Energieversorgungszweigs der Energiespeichereinrichtung 1 wie in den Fig. 3 bis 5 dargestellt, oder alternativ das über den Halbleiterschalter 33 implementierte Tastverhältnis des Tiefsetzstellers dienen. Es kann auch möglich sein, die über dem Zwischenkreiskondensator 35 anliegende Eingangsspannung U_{N} als Stellgröße für den Ladestrom I_{L} zu verwenden. Der Tiefsetzsteller kann beispielsweise auch in einem Betriebszustand mit dem konstanten Tastverhältnis von 1 betrieben werden, so dass der Halbleiterschalter 33 dauerhaft geschlossen bleiben kann. Es kann dabei auch möglich sein, auf den Halbleiterschalter 33 zu verzichten.

Fig. 9 zeigt eine schematische Darstellung einer Ladeschaltung 40, welche Eingangsanschlüsse 46a, 46b aufweist, an denen eine Ladewechselspannung U_{N} eingespeist werden kann. Die Ladewechselspannung U_{N} kann dabei durch (nicht gezeigte) Schaltungsanordnungen erzeugt werden, beispielsweise Wechselrichtervollbrücken oder dergleichen. Die Ladewechselspannung U_{N} weist vorzugsweise einen rechteckförmigen lückenden oder nicht lückenden Verlauf und eine hohe Grundfrequenz auf. Die Ladewechselspannung U_{N} kann beispielsweise durch ein eingangsseitig angeschlossenes Energieversorgungsnetz mit nachgeschalteter Wechsel- oder Umrichterbrücke bereitgestellt werden. Die Ladeschaltung 40 kann weiterhin einen Transformator 45 aufweisen, dessen Primärwicklung mit den Eingangsanschlüssen 46a, 46b gekoppelt ist. Die Sekundärwicklung des Transformators 45 kann mit einer Vollbrückengleichrichterschaltung 44 aus vier Dioden gekoppelt sein, an deren Ausgang eine pulsierende Gleichspannung abgegriffen werden kann. Eine Variation der Intervalllänge der pulsierenden Gleichspannung kann über eine Variation der Zeitintervalle erfolgen, in denen die an der Primärwicklung des Transformators 45 anliegende Ladewechselspannung U_{N} und damit auch die entsprechende Sekundärspannung an der Sekundärwicklung des Transformators 45 den Wert 0 aufweisen. An den Ladeschaltungsanschlüssen 8j, 8k der Ladeschaltung 40 kann eine Ausgangsspannung der Ladeschaltung 40 abgegriffen werden, welche zum Laden beispielsweise einer Reihe von Energiespeichermodulen 5 oder eines Zweigs einer Energiespeichereinrichtung 1 wie in den Fig. 3 bis 5 dargestellt, dienen kann.

Die Ladeschaltung 40 weist eine Freilaufdiode 42 und einen Halbleiterschalter 43 auf, die als Tiefsetzsteller für die pulsierende Gleichspannung der Vollbrückengleichrichterschaltung 44 dienen. Es kann dabei auch vorgesehen sein, eine Wandlerdrossel 41 zur Glättung der Ladespannung in die Ladeschaltung 40 zu integrieren. Als Stellgröße für den durch die Wandlerdrossel 41 fließenden Ladestrom I_{L} kann beispielsweise die Ausgangsspannung der zu ladenden Energiespeichermodule 3 oder eines Energieversorgungszweigs Z der Energiespeichereinrichtung 1 wie in den Fig. 3 bis 5 dargestellt, oder alternativ der Gleichanteil der pulsierenden Gleichspannung verwendet werden.

In einer weiteren Ausführungsform kann auf die Freilaufdiode 42 ersatzlos verzichtet werden. In diesem Fall übernehmen die Dioden der Vollbrückengleichrichterschaltung 44 die Funktion der Freilaufdiode 42 zusätzlich. Dadurch wird ein Bauelement gespart, im Gegenzug aber der Wirkungsgrad der Ladeschaltung 40 verringert.

Mit der Energiespeichereinrichtung 1 und der Gleichspannungsversorgungsschaltung 8 in Fig. 3 kann bei einem Betriebspunkt der elektrischen Maschine 2, welcher eine geringe Maschinenspannung erfordert, beispielsweise geringe Fahrgeschwindigkeit oder Stillstand eines elektrisch betriebenen Fahrzeugs, die Modulabgriffsschaltung 6 aktiviert werden, indem die Energiespeichermodule 3 der Energiespeichereinrichtung 1 derart angesteuert werden, dass an mindestens einem Koppelknoten K ein zur Speisung der Gleichspannungsversorgungsschaltung 8 geeignetes Potenzial ansteht. Sind die zugehörigen Modulschaltzweige A mit Modulkoppelschaltern 17 ausgeführt, so muss zudem zumindest der Modulkoppelschalter 17 jenes Modulschaltzweigs A geschlossen werden, das in diesem Betriebszustand die Stromführung vom Koppelknoten K zum Speiseanschluss 14a oder vom Speiseanschluss 14b zum Koppelknoten K übernimmt.

Fig. 4 zeigt eine schematische Darstellung eines Systems 300 mit einer Energiespeichereinrichtung 1 und einer Gleichspannungsversorgungsschaltung 8. Das System 300 unterscheidet sich von dem in Fig. 3 gezeigten System 200 im Wesentlichen darin, dass die Brückenschaltung 9 als Halbbrückenschaltung mit Kathodensammelpunkt ausgeführt ist, das heißt, dass lediglich die Phasenabgriffsanschlüsse 8a und 8b vorgesehen sind, über die Brückenschaltzweige A an die Phasenleitungen 2a, 2b der Energiespeichereinrichtung 1 angeschlossen sind. In der Gleichspannungsversorgungsschaltung 8 der Fig. 4 steht daher an einem Kathodensammelpunkt der Halbbrückenschaltung 9 stets das jeweils momentan höchste Potential der Phasenleitungen 2a, 2b an. Dieser Kathodensammelpunkt ist wiederum mit dem Speiseknoten 14a verbunden. Der Speiseknoten 14b ist dagegen mit der Sammelschiene 2c der Energiespeichereinrichtung verbunden. In der Modulabgriffsschaltung 6 sind in der in Fig. 4 dargestellten Ausführungsform ausschließlich Modulschaltzweige A vorgesehen, welche jeweils einen Koppelknoten K zwischen zwei Energiespeichermodulen 3 eines Energieversorgungszweigs Z mit dem Speiseknoten 14a koppeln. Auch in der Gleichspannungsversorgungsschaltung 8 der Fig. 4 besteht eine Potentialdifferenz zwischen dem Kathodensammelpunkt der Halbbrückenschaltung 9 und damit dem Speiseknoten 14a und dem Speiseknoten 14b, welche durch den Hochsetzsteller 14 zu einer Gleichspannung U_{ZK} hochgesetzt werden kann.

In gleichartiger Weise zeigt Fig. 5 eine schematische Darstellung eines Systems 400 mit einer Energiespeichereinrichtung 1 und einer Gleichspannungsversorgungsschaltung 8. Das System 400 unterscheidet sich von dem in Fig. 3 gezeigten System 200 im Wesentlichen darin, dass die Brückenschaltung 9 als Halbbrückenschaltung mit Anodensammelpunkt ausgeführt ist, das heißt, dass lediglich die Phasenabgriffsanschlüsse 8d und 8e vorgesehen sind, über die Brückenschaltzweige A an die Phasenleitungen 2a, 2b der Energiespeichereinrichtung 1 angeschlossen sind. In der Gleichspannungsversorgungsschaltung 8 der Fig. 5 steht daher an einem Anodensammelpunkt der Halbbrückenschaltung 9 stets das jeweils momentan niedrigste Potential der Phasenleitungen 2a, 2b an. Dieser Anodensammelpunkt ist wiederum mit dem Speiseknoten 14b verbunden. Der Speiseknoten 14a ist in dieser Ausführungsform dagegen mit der Sammelschiene 2c der Energiespeichereinrichtung verbunden. In der Modulabgriffsschaltung 6 sind in der in Fig. 5 dargestellten Ausführungsform ausschließlich Modulschaltzweige A vorgesehen, welche jeweils einen Koppelknoten K zwischen zwei Energiespeichermodulen 3 eines Energieversorgungszweigs Z mit dem Speiseknoten 14b koppeln. Auch in der Gleichspannungsversorgungsschaltung 8 der Fig. 5 besteht eine Potentialdifferenz zwischen dem Speiseknoten 14a und dem Anodensammelpunkt der Halbbrückenschaltung 9 und damit dem Speiseknoten 14b, welche durch den Hochsetzsteller 14 zu einer Gleichspannung U_{ZK} hochgesetzt werden kann.

Die optionalen Ladeanschlüsse 8j und 8k können statt am Speiseknoten 14b auch am Speiseknoten 14a angeordnet sein.

Mit den Systemen 300 und 400 der Fig. 4 und 5 können einem Betriebspunkt der elektrischen Maschine 2, welcher eine geringe Maschinenspannung erfordert, beispielsweise geringe Fahrgeschwindigkeit oder Stillstand eines elektrisch betriebenen Fahrzeugs, die Modulabgriffsschaltungen 6 aktiviert werden, indem die Energiespeichermodule 3 der Energiespeichereinrichtung 1 derart angesteuert werden, dass an mindestens einem Koppelknoten K ein zur Speisung der Gleichspannungsversorgungsschaltung 8 geeignetes Potenzial ansteht. Ist der zugehörige Modulschaltzweig A mit einem Modulkoppelschalter 17 ausgeführt, so muss zudem zumindest der Modulkoppelschalter 17 dieses Modulschaltzweigs A geschlossen werden.

Dadurch ist sichergestellt, dass die Ausgangsspannung der Modulabgriffsschaltung 6 nicht unter die Summe der Modulspannungen der zwischen die Koppelknoten K und die Sammelschiene 2c in Reihe geschalteten Energiespeichermodule 3 absinken kann, wenn diese entsprechend mit voller Ausgabespannung betrieben werden.
Im Ladebetrieb, das heißt bei aktivierter Ladeschaltung 30 bzw. 40 im sogenannten Range-Extender-Betrieb, können einzelne Halbleiterschalter 17 der Brückenschaltung 9 und/oder der Modulabgriffsschaltung 6 gesperrt werden, damit der Ladestrom der Ladeschaltung 30 bzw. 40 stets über die momentan für eine Energiezuführung in die Energiespeichereinrichtung 1 geeigneten Ausgangsanschlüsse 1a, 1b, 1c oder Koppelknoten K gegen die aktuell dazwischen anstehende Spannung getrieben werden kann. Einzelne der Halbleiterschalter 17 der Modulschaltzweige A und/oder Brückenschaltzweige A können gezielt gesperrt werden, um ein Laden der jeweils anderen Energieversorgungszweige Z zu ermöglichen.
Alle Schaltelemente der angegebenen Schaltungsanordnungen können Leistungshalbleiterschalter umfassen, beispielsweise normal sperrende oder normal leitende n- oder p-Kanal-MOSFET-Schalter oder entsprechende IGBT-Schalter. Bei der Verwendung von Leistungshalbleiterschaltern mit definierter und ausreichender Rückwärtssperrfähigkeit kann auf die entsprechenden Reihenschaltungen mit Dioden verzichtet werden.

Fig. 7 zeigt eine schematische Darstellung eines Verfahrens 20 zum Bereitstellen einer Gleichspannung aus einer Energiespeichereinrichtung, insbesondere einer Energiespeichereinrichtung 1, wie im Zusammenhang mit den Fig. 1 bis 6 und 8 bis 9 beschrieben. Das Verfahren 20 kann beispielsweise zum Bereitstellen einer Gleichspannung aus einer Energiespeichereinrichtung 1 eines elektrisch betriebenen Fahrzeugs mit einem elektrischen Antriebssystem 200, 300 oder 400 der Fig. 3, 4 bzw. 5 eingesetzt werden, insbesondere für ein Gleichspannungsbordnetz des Fahrzeugs.
In einem Schritt 21 kann zunächst ein Ermitteln der Ausgabespannung der Energieversorgungszweige Z an den Ausgangsanschlüssen 1 a, 1 b der Energiespeichereinrichtung 1 erfolgen. In Abhängigkeit von der ermittelten Ausgabespannung kann dann in Schritt 22 ein schaltendes Koppeln eines Koppelknotens K zwischen zwei Energiespeichermodulen 3 eines der Energieversorgungszweige Z mit dem ersten Speiseknoten 14a oder dem zweiten Speiseknoten 14b erfolgen. Dies erfolgt in vorteilhafter Weise vor allem dann, wenn die ermittelte Ausgabespannung geringer ist als die maximale Ausgabespannung eines einzelnen Energiespeichermoduls 3. Ebenso kann im Schritt 22 ein schaltendes Koppeln eines ersten Koppelknotens K zwischen zwei Energiespeichermodulen 3 eines der Energieversorgungszweige Z mit dem ersten Speiseknoten 14a und ein schaltendes Koppeln eines zweiten Koppelknotens K zwischen zwei Energiespeichermodulen 3 eines der Energieversorgungszweige Z mit dem zweiten Speiseknoten 14b erfolgen.

In diesem Betriebsmodus können dann in Schritt 24 die sich zwischen den Koppelknoten K und der Sammelschiene 2c der Energiespeichereinrichtung 1 befindlichen Energiespeichermodule 3 jeder der Energieversorgungszweige Z derart betrieben werden, dass zwischen den Speiseknoten 14a und 14b stets mindestens die Spannung eines Energiespeicherzellenmoduls 5 anliegt. Besonders vorteilhaft ist es jedoch, die in Rede stehenden Energiespeichermodule 3 in Abhängigkeit von der Stromflussrichtung mit der maximalen oder der invertierten maximalen Modulausgabespannung zu betreiben. Die Ausgabespannung der übrigen Energiespeichermodule 3 jeder der Energieversorgungszweige Z kann in Schritt 25 derart eingestellt werden, dass die Gesamtausgabespannung der Energieversorgungszweige Z an den Ausgangsanschlüssen 1a, 1b der Energiespeichereinrichtung 1 dem in Schritt 21 ermittelten Sollwert entspricht.

## Patentansprüche

1. System (200; 300; 400) mit einer Energiespeichereinrichtung (1) und einer Gleichspannungsversorgungsschaltung (8), wobei die Energiespeichereinrichtung (1) mindestens zwei Energieversorgungszweige (Z) aufweist, welche an einem ersten Ausgang jeweils mit mindestens einem Ausgangsanschluss (1 a, 1 b) der Energiespeichereinrichtung (1) zur Erzeugung einer Wechselspannung an den Ausgangsanschlüssen (1a, 1b) und an einem zweiten Ausgang mit einer gemeinsamen Sammelschiene (2c) gekoppelt sind, wobei jeder der Energieversorgungszweige (Z) eine Vielzahl von in Serie geschalteten Energiespeichermodulen (3) aufweist, welche jeweils umfassen:
ein Energiespeicherzellenmodul (5), welches mindestens eine Energiespeicherzelle (5a, 5k) aufweist; und
eine Koppeleinrichtung (7) mit einer Koppelbrückenschaltung aus Koppelelementen (7a, 7b, 7c, 7d), wobei die Koppelelemente (7a, 7b, 7c, 7d) dazu ausgelegt sind, das Energiespeicherzellenmodul (5) selektiv in den jeweiligen Energieversorgungszweig (Z) zu schalten oder in dem Energieversorgungszweig (Z) zu umgehen, und wobei die Gleichspannungsversorgungsschaltung (8) aufweist:
eine Brückenschaltung (9) mit einer Vielzahl von ersten Speiseanschlüssen (8a, 8b), welche jeweils mit einem der Ausgangsanschlüsse (1 a, 1 b) der Energiespeichereinrichtung (1) gekoppelt sind;
zwei Speiseknoten (14a, 14b), von denen mindestens einer mit der Brückenschaltung (9) gekoppelt ist;
**gekennzeichnet durch**
eine Modulabgriffsschaltung (6), welche mindestens einen Modulschaltzweig (A) mit einer Kommutierungsdiode (16) aufweist, wobei jeder der mindestens einen Modulschaltzweige (A) einen Koppelknoten (K) zwischen zwei Energiespeichermodulen (3) eines der Energieversorgungszweige (Z) schaltbar mit einem Speiseknoten (14a, 14b) verbindet.

2. System (200; 300; 400) nach Anspruch 1,
**dadurch gekennzeichnet, dass** mindestens einer der mindestens einen Modulschaltzweige (A) zusätzlich zur Kommutierungsdiode (16) einen zu dieser Kommutierungsdiode (16) in Reihe geschalteten Modulkoppelschalter (17) aufweist.

3. System (200; 300; 400) nach Anspruch 1 oder 2, weiterhin mit:
einem Gleichspannungswandler (14), welcher zwischen den ersten Speiseknoten (14a) und den zweiten Speiseknoten (14b) gekoppelt ist.

4. System (200; 300; 400) nach Anspruch 3, wobei der Gleichspannungswandler (14) einen Hochsetzsteller oder einen Durchflusswandler aufweist.

5. System (200; 300; 400) nach einem der Ansprüche 1 bis 4, wobei die Gleichspannungsversorgungsschaltung (8) zwei Ladeschaltungsanschlüsse (8j, 8k) und eine Ladeschaltung aufweist, wobei die Ladeschaltung bei gleichzeitigem Vorhandensein des Gleichspannungswandlers (14) über die zwei Ladeschaltungsanschlüsse (8j, 8k) in Reihe zu dem Gleichspannungswandler (14) gekoppelt ist und wobei die Ladeschaltung bei nicht Vorhandensein des Gleichspannugnswandlers (14) mit den zwei Ladeschaltungsanschlüssen (8j; 8k) direkt an die Speiseknoten (14a; 14b) angeschlossen ist und wobei die Ladeschaltung dazu ausgelegt ist, eine Ladegleichspannung für die Energiespeicherzellenmodule (5) der Energiespeichereinrichtung (1) bereitzustellen.

6. System (200; 300; 400) nach einem der Ansprüche 1 bis 5, wobei die Brückenschaltung (9) eine Vielzahl von ersten Brückenzweigen (A) mit einer Diode (16) oder der Reihenschaltung aus einer Diode (16) und einem Brückenkoppelschalter (17) aufweist, welche jeweils zwischen den mit der Brückenschaltung verbundenen Speiseknoten (14a; 14b) und einen der Vielzahl von ersten Speiseanschlüssen (8a, 8b) oder von zweiten Speiseanschlüssen (8d; 8e) gekoppelt sind.

7. System (200; 300; 400) nach einem der Ansprüche 1 bis 6, wobei die Brückenschaltung einen weiteren ersten Speiseanschluss (8c) oder einen weiteren zweiten Speiseanschluss (8f) aufweist, welcher mit dem Ausgangsanschluss (1 c) der Energiespeichereinrichtung (1) und damit mit deren Sammelschiene (2c) verbunden ist

8. System (200; 300; 400) nach einem der Ansprüche 1 bis 7, wobei die Brückenschaltung (9) sowohl eine Vielzahl von ersten Speiseanschlüssen (8a, 8b, 8c) als auch eine Vielzahl von zweiten Speiseanschlüssen (8d, 8e, 8f) aufweist, welche jeweils mit einem der Ausgangsanschlüsse (1a, 1 b) oder der Sammelschiene (2c) der Energiespeichereinrichtung (1) gekoppelt sind.

9. System (200; 300; 400) nach Anspruch 7, wobei die Brückenschaltung (9) einen weiteren Brückenschaltzweig (A) aufweist, welcher den weiteren ersten Speiseanschluss (8c) oder den weiteren zweiten Speiseanschluss (8f) mit jenem der beiden Speiseknoten (14a; 14b) verbindet, der bereits über die Brückenschaltung (9) mit den ersten Speiseanschlüssen (8a; 8b) oder mit den zweiten Speiseknoten (8d; 8e) verbunden ist.

10. System (200; 300; 400) nach Anspruch 8, wobei die Brückenschaltung (9) eine Vielzahl von ersten Brückenzweige (A) und eine Vielzahl von zweiten Brückenschaltzweigen (A) mit jeweils einer Diode (16) oder einer Reihenschaltung aus einer Diode (16) und einem Brückenkoppelschalter (17) aufweist, wobei die ersten Brückenschaltzweige (A) jeweils zwischen einen der Vielzahl der ersten Speiseanschlüsse (8a; 8b; 8c) und den ersten Speiseknoten (14a) geschaltet sind und wobei die zweiten Brückenschaltzweige (A) jeweils zwischen einen der Vielzahl der zweiten Speiseanschlüsse (8d; 8e; 8f) und den zweiten Speiseknoten (14b) geschaltet sind, und wobei die direkte elektrisch leitende Verbindung zwischen einem der Speiseknoten (14a; 14b) und der Sammelschiene (2c) der Energiespeichereinrichtung (1) entfällt.

11. System nach Anspruch 10, wobei jeder der mindestens einen Koppelknoten K über einen Modulschaltzweig (A) mit einem beliebigen Speiseknoten (14a; 14b) verbunden ist oder alternativ über jeweils einen Modulschaltzweig (A) mit jedem der beiden Speiseknoten (14a; 14b) verbunden ist.

12. System (200; 300; 400) nach einem der Ansprüche 1 bis 11, wobei jeder Energieversorgungszweig (Z) der Energiespeichereinrichtung (1) maximal einen Koppelknoten (K) aufweist und wobei die Anzahl der Energiespeichermodule (3) in den jeweiligen Energieversorgungszweigen (Z) auf beiden Seiten des jeweiligen Koppelknotens (K) identisch ist.

13. System (200; 300; 400) nach einem der Ansprüche 1 bis 12, weiterhin mit:
einer n-phasigen elektrischen Maschine (2) mit n Phasenanschlüssen, welche mit den Ausgangsanschlüssen (1a, 1b) der Energiespeichereinrichtung (1) gekoppelt ist, wobei n ≥ 1.

14. System (200; 300; 400) nach Anspruch 13,
wobei die n-phasige elektrische Maschine über einen herausgeführten Wicklungssternpunkt verfügt und wobei dieser Wicklungssternpunkt mit dem Ausgangsanschluss (1c) der Energiespeichereinrichtung (1) und damit mit deren Sammelschiene (2c) verbunden ist.

15. Verfahren (20) zum Bereitstellen einer Gleichspannung aus einem System (200; 300; 400) nach einem der Ansprüche 1 bis 14, mit den Schritten:
Ermitteln (21) der Ausgabespannung der Energieversorgungszweige (Z) an den Ausgangsanschlüssen (1a, 1b) der Energiespeichereinrichtung (1);
schaltendes Koppeln (22) von zumindest einem Koppelknoten (K) zwischen zwei Energiespeichermodulen (3) eines der Energieversorgungszweige (Z) mit einem über einen Modulschaltzweig (A) mit diesem Koppelknoten verbindbaren Speiseknoten (14a; 14b) falls die ermittelte Ausgabespannung der Energiespeichereinrichtung (1) geringer ist als die maximale Ausgabespannung eines einzelnen Energiespeichermoduls (3);
Betreiben (24) der sich zwischen den Koppelknoten (K) und einer Sammelschiene (2c) der Energiespeichereinrichtung (1) befindlichen Energiespeichermodule (3) derart, dass stets zumindest an einem der Koppelknoten (K) ein Potenzial ansteht, das sich mindestens um die maximale Ausgangsspannung eines Energiespeichermoduls (3) vom Potenzial der Sammelschiene (2c) unterscheidet; und
Einstellen (25) der Ausgabespannung der übrigen Energiespeichermodule (3) jedes der Energieversorgungszweige (Z) derart, dass die Gesamtausgabespannung der Energieversorgungszweige (Z) an den Ausgangsanschlüssen (1 a, 1 b) der Energiespeichereinrichtung (1) der in Schritt (21) ermittelten Spannung entspricht.

## Claims

1. System (200; 300; 400) comprising an energy storage device (1) and a DC voltage supply circuit (8), wherein the energy storage device (1) has at least two energy supply branches (Z) which are coupled at a first output in each case to at least one output terminal (1a, 1b) of the energy storage device (1) for generating an AC voltage at the output terminals (1a, 1b) and are coupled at a second output to a common busbar (2c) wherein each of the energy supply branches (Z) has a multiplicity of series-connected energy storage modules (3) which in each case comprise:
an energy storage cell module (5) having at least one energy storage cell (5a, 5k); and
a coupling device (7) having a coupling bridge circuit composed of coupling elements (7a, 7b, 7c, 7d) wherein the coupling elements (7a, 7b, 7c, 7d) are designed selectively to switch the energy storage cell module (5) into the respective energy supply branch (Z) or to bypass it in the energy supply branch (Z), and wherein the DC voltage supply circuit (8) has:
a bridge circuit (9) having a multiplicity of first feed terminals (8a, 8b) which are in each case coupled to one of the output terminals (1a, 1b) of the energy storage device (1);
two feed nodes (14a, 14b), at least one of which is coupled to the bridge circuit (9);
**characterized by**
a module tapping circuit (6), which has at least one module switching branch (A) having a commutation diode (16), wherein each of the at least one module switching branches (A) connects a coupling node (K) between two energy storage modules (3) of one of the energy supply branches (Z) to a feed node (14a, 14b) in a switchable manner.

2. System (200; 300; 400) according to Claim 1, **characterized in that** at least one of the at least one module switching branches (A) has, in addition to the commutation diode (16), a module coupling switch (17) connected in series with said commutation diode (16).

3. System (200; 300; 400) according to Claim 1 or 2, furthermore comprising:
a DC-DC converter (14) coupled between the first feed node (14a) and the second feed node (14b).

4. System (200; 300; 400) according to Claim 3, wherein the DC-DC converter (14) has a step-up converter or a forward converter.

5. System (200; 300; 400) according to any of Claims 1 to 4, wherein the DC voltage supply circuit (8) has two charging circuit terminals (8j, 8k) and a charging circuit, wherein the charging circuit in the presence simultaneously of the DC-DC converter (14) is coupled in series with the DC-DC converter (14) via the two charging circuit terminals (8j, 8k) and wherein the charging circuit in the absence of the DC-DC converter (14) is directly connected to the feed nodes (14a; 14b) by the two charging circuit terminals (8j; 8k) and wherein the charging circuit is designed to provide a charging DC voltage for the energy storage cell modules (5) of the energy storage device (1).

6. System (200; 300; 400) according to any of Claims 1 to 5, wherein the bridge circuit (9) has a multiplicity of first bridge branches (A) having a diode (16) or the series circuit formed by a diode (16) and a bridge coupling switch (17) which are coupled in each case between the feed node (14a; 14b) connected to the bridge circuit and one of the multiplicity of first feed terminals (8a, 8b) or second feed terminals (8d; 8e).

7. System (200; 300; 400) according to any of Claims 1 to 6, wherein the bridge circuit has a further first feed terminal (8c) or a further second feed terminal (8f), which is connected to the output terminal (1c) of the energy storage device (1) and thus to the busbar (2c) thereof.

8. System (200; 300; 400) according to any of Claims 1 to 7, wherein the bridge circuit (9) has both a multiplicity of first feed terminals (8a, 8b, 8c) and a multiplicity of second feed terminals (8d, 8e, 8f), which are coupled in each case to one of the output terminals (1a, 1b) or the busbar (2c) of the energy storage device (1).

9. System (200; 300; 400) according to Claim 7, wherein the bridge circuit (9) has a further bridge switching branch (A), which connects the further first feed terminal (8c) or the further second feed terminal (8f) to that one of the two feed nodes (14a; 14b) which is already connected via the bridge circuit (9) to the first feed terminals (8a; 8b) or to the second feed nodes (8d, 8e).

10. System (200; 300; 400) according to Claim 8, wherein the bridge circuit (9) has a multiplicity of first bridge branches (A) and a multiplicity of second bridge switching branches (A) having in each case a diode (16) or a series circuit formed by a diode (16) and a bridge coupling switch (17), wherein the first bridge switching branches (A) are connected in each case between one of the multiplicity of first feed terminals (8a; 8b; 8c) and the first feed node (14a), and wherein the second bridge switching branches (A) are connected in each case between one of the multiplicity of second feed terminals (8d; 8e; 8f) and the second feed node (14b), and wherein the direct electrically conductive connection between one of the feed nodes (14a; 14b) and the busbar (2c) of the energy storage device (1) is obviated.

11. System according to Claim 10, wherein each of the at least one coupling nodes K is connected to an arbitrary feed node (14a; 14b) via a module switching branch (A) or is alternatively connected to each of the two feed nodes (14a; 14b) via a respective module switching branch (A).

12. System (200; 300; 400) according to any of Claims 1 to 11, wherein each energy supply branch (Z) of the energy storage device (1) has maximally one coupling node (K), and wherein the number of energy storage modules (3) in the respective energy supply branches (Z) is identical on both sides of the respective coupling node (K).

13. System (200; 300; 400) according to any of Claims 1 to 12, furthermore comprising:
an n-phase electrical machine (2) having n phase terminals, which is coupled to the output terminals (1a, 1b) of the energy storage device (1), wherein n ≥ 1.

14. System (200; 300; 400) according to Claim 13,
wherein the n-phase electrical machine has a led-out winding star point, and wherein said winding star point is connected to the output terminal (1c) of the energy storage device (1) and thus to the busbar (2c) thereof.

15. Method (20) for providing a DC voltage from a system (200; 300; 400) according to any of Claims 1 to 14, comprising the following steps:
determining (21) the output voltage of the energy supply branches (Z) at the output terminals (1a, 1b) of the energy storage device (1);
switching coupling (22) of at least one coupling node (K) between two energy storage modules (3) of one of the energy supply branches (Z) to a feed node (14a; 14b) that is connectable to said coupling node via a module switching branch (A) if the determined output voltage of the energy storage device (1) is lower than the maximum output voltage of an individual energy storage module (3);
operating (24) the energy storage modules (3) situated between the coupling nodes (K) and a busbar (2c) of the energy storage device (1) in such a way that a potential that differs from the potential of the busbar (2c) at least by the maximum output voltage of an energy storage module (3) is always present at least at one of the coupling nodes (K); and
setting (25) the output voltage of the other energy storage modules (3) of each of the energy supply branches (Z) in such a way that the total output voltage of the energy supply branches (Z) at the output terminals (1a, 1b) of the energy storage device (1) corresponds to the voltage determined in step (21).

## Revendications

1. Système (200 ; 300 ; 400) comprenant un dispositif accumulateur d'énergie (1) et un circuit d'alimentation en tension continue (8), dans lequel le dispositif accumulateur d'énergie (1) présente au moins deux branches d'alimentation en énergie (Z) qui sont respectivement couplées, au niveau d'une première sortie, à au moins une borne de sortie (1a, 1b) du dispositif accumulateur d'énergie (1) pour générer une tension alternative aux bornes de sortie (1a, 1b) et, au niveau d'une deuxième sortie, à une barre omnibus commune (2c), dans lequel chacune des branches d'alimentation en énergie (Z) présente une pluralité de modules accumulateurs d'énergie (3) connectés en série, lesquels modules accumulateurs d'énergie comprennent :
un module d'éléments accumulateurs d'énergie (5), qui présente au moins un élément accumulateur d'énergie (5a, 5k) ; et
un dispositif de couplage (7) comprenant un circuit en pont de couplage constitué d'éléments de couplage (7a, 7b, 7c, 7d), dans lequel les éléments de couplage (7a, 7b, 7c, 7d) sont conçus de manière à connecter sélectivement le module d'éléments accumulateurs d'énergie (5) dans la branche d'alimentation en énergie (Z) respective ou à court-circuiter la branche d'alimentation en énergie (Z), et dans lequel le circuit d'alimentation en tension continue (8) présente :
un circuit en pont (9) comprenant une pluralité de premières bornes d'alimentation (8a, 8b) qui sont respectivement couplées à l'une des bornes de sortie (1a, 1b) du dispositif accumulateur d'énergie (1) ;
deux noeuds d'alimentation (14a, 14b), dont au moins l'un est copulé au circuit en pont (9) ;
**caractérisé par**
un circuit de prélèvement de module (6) qui présente au moins une branche de commutation de module (A) ayant une diode de commutation (16), dans lequel chacune desdites au moins une branche de commutation de module (A) connecte de manière commutable un noeud de couplage (K) à un noeud d'alimentation (14a, 14b) entre deux modules accumulateurs d'énergie (3) d'une branche d'alimentation en énergie (Z).

2. Système (200; 300; 400) selon la revendication 1,
**caractérisé en ce qu'**au moins l'une desdites au moins une branche de commutation de module (A) présente en plus de la diode de commutation (16) un commutateur de couplage de module (17) connecté en série à ladite diode de commutation (16).

3. Système (200 ; 300; 400) selon la revendication 1 ou 2, comprenant en outre :
un convertisseur de tension continue (14) qui est couplé entre le premier noeud d'alimentation (14a) et le deuxième noeud d'alimentation (14b).

4. Système (200; 300; 400) selon la revendication 3, dans lequel le convertisseur de tension continue (14) présente un convertisseur élévateur ou un convertisseur direct.

5. Système (200 ; 300 ; 400) selon l'une quelconque des revendications 1 à 4, dans lequel le circuit d'alimentation à tension continue (8) présente deux bornes de commutation de charge (8j, 8k) et un circuit de charge, dans lequel le circuit de charge, en cas de présence simultanée du convertisseur de tension continue (14), est couplé en série au convertisseur de tension continue (14) par l'intermédiaire des deux bornes de circuit de charge (8j, 8k) et dans lequel le circuit de charge, en cas d'absence du convertisseur de tension continue (14), est directement raccordé aux deux bornes de circuit de charge (8j; 8k) au niveau des noeuds d'alimentation (14a ; 14b) et dans lequel le circuit de charge est conçu pour fournir une tension continue de charge destinée aux modules d'éléments accumulateurs d'énergie (5) du dispositif accumulateur d'énergie (1).

6. Système (200; 300; 400) selon l'une quelconque des revendications 1 à 5, dans lequel le circuit en pont (9) présente une pluralité de premières branches de pont (A) comprenant une diode (16) ou le circuit série constitué d'une diode (16) et d'un commutateur de couplage de pont (17), lesquelles branches de pont sont respectivement couplées entre les noeuds d'alimentation (14a; 14b) connectés au circuit en pont et l'une de la pluralité de premières bornes d'alimentation (8a, 8b) ou de deuxièmes bornes d'alimentation (8d ; 8e).

7. Système (200 ; 300; 400) selon l'une quelconque des revendications 1 à 6, dans lequel le circuit en pont présente une autre première borne d'alimentation (8c) ou une autre deuxième borne d'alimentation (8f), laquelle borne est connectée à la borne de sortie (1c) du dispositif accumulateur d'énergie (1) et par conséquent à sa barre omnibus (2c).

8. Système (200; 300; 400) selon l'une quelconque des revendications 1 à 7, dans lequel le circuit en pont (9) présente une pluralité de premières bornes d'alimentation (8a, 8b, 8c) ainsi qu'une pluralité de deuxièmes bornes d'alimentation (8d, 8e, 8f), qui sont respectivement couplées à l'une des bornes de sortie (1a, 1b) ou à la barre omnibus (2c) du dispositif accumulateurs d'énergie (1).

9. Système (200; 300; 400) selon la revendication 7, dans lequel le circuit en pont (9) présente une autre branche de commutation de pont (A) qui connecte la première autre borne d'alimentation (8c) ou la deuxième autre borne d'alimentation (8f) à celui des deux noeuds d'alimentation (14a ; 14b) qui est déjà connecté par l'intermédiaire du circuit en pont (9) aux premières bornes d'alimentation (8a ; 8b) ou aux deuxièmes noeuds d'alimentation (8d ; 8e).

10. Système (200 ; 300 ; 400) selon la revendication 8, dans lequel le circuit en pont (9) présente une pluralité de premières branches de pont (A) et une pluralité de deuxième branches de pont (A) comprenant chacune une diode (16) ou un circuit série constitué d'une diode (16) et d'un commutateur de couplage de pont (17), dans lequel les premières branches de commutation de pont (A) sont respectivement connectées entre l'une de la pluralité de premières bornes d'alimentation (8a ; 8b ; 8c) et le premier noeud d'alimentation (14a) et dans lequel les deuxièmes branches de commutation de pont (A) sont respectivement connectées entre l'une de la pluralité de deuxièmes bornes d'alimentation (8d ; 8e ; 8f) et le deuxième noeud d'alimentation (14b), et dans lequel la liaison électriquement conductrice directe entre l'un des noeuds d'alimentation (14a ; 14b) et la barre omnibus (2c) est établie par le dispositif accumulateur d'énergie (1).

11. Système selon la revendication 10, dans lequel chacun de l'au moins un noeud de couplage K est connecté par l'intermédiaire d'une branche de commutation de module (A) à un noeud d'alimentation (14a ; 14b) quelconque ou, en variante, est connecté à chacun des deux noeuds d'alimentation (14a; 14b) par l'intermédiaire d'une branche de commutation de module (A) respective.

12. Système (200; 300; 400) selon l'une quelconque des revendications 1 à 11, dans lequel chaque branche d'alimentation en énergie (Z) du dispositif accumulateur d'énergie (1) présente au maximum un noeud de couplage (K) et dans lequel le nombre des modules accumulateurs d'énergie (3) dans les branches d'alimentation en énergie (Z) respectives est identique des deux côtés du noeud de couplage (K) respectif.

13. Système (200; 300; 400) selon l'une quelconque des revendications 1 à 12, comportant en outre :
une machine électrique à n phases (2) comprenant n bornes de phase, qui est couplée aux bornes de sortie (1a, 1b) du dispositif accumulateur d'énergie (1), dans lequel n ≥ 1.

14. Système (200; 300; 400) selon la revendication 13,
dans lequel la machine électrique à n phases comporte un point neutre d'enroulement sortant et dans lequel ledit point neutre d'enroulement est connecté à la borne de sortie (1c) du dispositif accumulateur d'énergie (1) et par conséquent, à sa barre omnibus (2c).

15. Procédé (20) destiné à fournir une tension continue à partir d'un système (200 ; 300; 400) selon l'une quelconque des revendications 1 à 14, comprenant les étapes consistant à :
déterminer (21) la tension de sortie de la branche d'alimentation en énergie (Z) au niveau des bornes de sortie (1a, 1b) du dispositif accumulateur d'énergie (1) ;
coupler (22) de manière commutée au moins un noeud de couplage (K) entre deux modules accumulateurs d'énergie (3) d'une branche d'alimentation en énergie (Z) à des noeuds d'alimentation (14a; 14b) pouvant être connectés à celui-ci par l'intermédiaire d'une branche de commutation de module (A) dans le cas où la tension de sortie déterminée du dispositif accumulateur d'énergie (1) est inférieure à la tension de sortie maximale d'un module accumulateur d'énergie (3) individuel;
faire fonctionner (24) le module accumulateur d'énergie (3) se trouvant entre le noeud de couplage (K) et une barre omnibus (2c) du dispositif accumulateur (1) de manière à ce qu'il apparaisse au lieu de cela, au niveau de l'un des noeuds de couplage (K), un potentiel qui présente une différence au moins égale à la tension de sortie maximale d'un module accumulateur d'énergie (3) par rapport au potentiel de la barre omnibus (2c) ; et
régler (25) la tension de sortie des autres modules accumulateurs d'énergie (3) de chacune des branches d'alimentation en énergie (Z) de manière à ce que la tension de sortie totale de la branche d'alimentation en énergie (Z), au niveau des bornes de sortie (1a, 1b) du dispositif accumulateur d'énergie (1), corresponde à la tension déterminée à l'étape (21).
